# EUROPÄISCHE PATENTSCHRIFT

(11) **EP 0 956 520 B1**
(45) Veröffentlichungstag und Bekanntmachung des Hinweises auf die Patenterteilung: **16.04.2003**
(21) Anmeldenummer: 98905248.5
(22) Anmeldetag: 13.01.1998
(51) Int. Cl.: G05B 19/23

(54) **NACHLAUFERFASSUNG VON ELEKTRISCHEN STELLMOTOREN MIT INKREMENTALER POSITIONSERFASSUNG**
TRACKING DETECTION OF ELECTRIC CONTROL MOTORS WITH INCREMENTAL POSITION DETECTION
DETECTION DE POURSUITE DE MOTEURS DE COMMANDE ELECTRIQUES A DETECTION DE POSITION INCREMENTIELLE

(30) Priorität: 28.01.1997 DE 19702931
(43) Veröffentlichungstag der Anmeldung: 17.11.1999
(73) Patentinhaber: ROBERT BOSCH GMBH, 70442 Stuttgart (DE)
(72) Erfinder: HEIB, Johannes, D-77830 Bühlertal (DE); KAHLES, Patric, D-76534 Baden-Baden (DE)
(86) Internationale Anmeldenummer: DE9800098
(87) Internationale Veröffentlichungsnummer: WO98033101

(56) Entgegenhaltungen:
- EP-A- 0 671 676
- US-A- 3 585 372
- US-A- 3 646 419
- US-A- 5 532 583
- PATENT ABSTRACTS OF JAPAN vol. 010, no. 215 (P-481), 26.Juli 1986 & JP 61 054502 A (MITSUBISHI ELECTRIC CORP), 18.März 1986,

## Beschreibung

### Stand der Technik

Die Erfindung geht aus von einer Nachlauferfassung von elektrischen Stellmotoren mit inkrementaler Positionserfassung, einer Auswerteelektronik und einem nichtflüchtigen Speicher, insbesondere bei Verstellmotoren in Kraftfahrzeugen, gemäß der im Oberbegriff des Anspruchs 1 definierten Gattung.

Aus der EP 0 603 506 A2 ist ein Verfahren zur Lagerbestimmung eines elektromotorisch in zwei Richtungen angetriebenen Teils von Kraftfahrzeugen bekannt. Mit Hilfe eines Zählers werden beim Bewegen des Teils in seine beiden Richtungen Zählimpulse eines Stellungsgebers in den Zähler zum Verringern bzw. Erhöhen des Zählstandes entsprechend der vorgegebenen Bewegung eingegeben. Nach Abschalten des Antriebsmotors werden die vom Stellungsgeber gelieferten Impulse in ihrem zeitlichen Abstand vom Abschaltzeitpunkt analysiert und einer Weiterbewegung des Zählers zugeordnet, wenn der zeitliche Abstand der Impulse ein vorgegebenes Maß nicht übersteigt. Beim Umpolen des Antriebsmotors wird die Zählrichtung erst dann der neuen Bewegungsrichtung zugeordnet, wenn der Abstand der Impulse nach dem Umpolen sich wieder verkleinert.

Bei diesem bekannten Verfahren ist nichts über Maßnahmen ausgesagt, die eine Nachlauferfassung bei vorzeitiger Abschaltung von der Versorgungsspannung und eine Speicherung von Positionsdaten zur nachträglichen Positionskorrektur bei Wiederanschaltung an die Versorgungsspannung, sowie eine Verkürzung der für die Nachlauferfassung notwendigen Zeit ermöglichen.

Auch die JP 61 054 502 (Zusammenfassung) beschreibt die Erfassung von Positionsimpulsen beim Verstellen eines beweglichen Teils während des Trägheitsnachlaufs. Dabei ist bei einer Service-Unterbrechung eine Notstromversorgung für den Impulszähler aktiviert.

Mit der EP-A 0 671 676 ist ein elektrisches Steuersystem für Roll- und Fensterläden bekannt geworden, bei dem der Drehwinkel und die Drehrichtung mittels Impulsen detektiert wird. Die gemessenen Impulse werden zusammen mit den Positionsdaten des Stellmotors in einem nichtflüchtigen Speicher abgespeichert, miteinander verglichen und insbesondere in der Nachlaufphase gegebenenfalls die Positionserfassung korrigiert.

### Vorteile der Erfindung

Die erfindungsgemäße Nachlauferfassung mit den kennzeichnenden Merkmalen des Anspruchs 1 hat den entscheidenden Vorteil, dass alle wichtigen Daten über den Systemstatus in einem nichtflüchtigen Speicher gespeichert werden und somit beim nächsten Systemstart wieder zugrundegelegt werden können.

Gemäß der Erfindung ist prinzipiell bei der Nachlauferfassung von elektrischen Stellmotoren mit inkrementaler Positionserfassung zur Nachlauferfassung eine zeitweise abschaltbare Auswerteelektronik vorgesehen, welche die Positionssignale von Positionsgebern festgestellt, und wobei die Auswerteelektronik die festgestellten Zustände der Positionssignale bzw. die Zustände der Positionsgeber, in einem nichtflüchtigen Speicher abgespeichert.

Durch die in den weiteren Ansprüchen niedergelegten Maßnahmen sind vorteilhafte Weiterbildungen und Verbesserungen der im Anspruch 1 angegebenen Nachlauferfassung von elektrischen Stellmotoren möglich.

Gemäß einer besonders vorteilhaften Ausgestaltung der erfindungsgemäßen Anordnung ist die Auswerteelektronik mit einer Pufferung versehen, die genügend groß ist zur Positionserfassung und Abspeicherung nach Abschaltung der Auswerteelektronik von der Versorgungsspannung. Durch diese besondere Ausgestaltung wird die Auswerteelektronik energiesparend nur dann eingeschaltet, wenn sie bedarfsgemäß gebraucht wird. Dadurch, daß alle wichtigen Systemdaten vor bzw. um die Abschaltung herum gespeichert wurden, stehen sie nach dem erneuten Systemstart wieder zur Verfügung und bilden die Basis für die Weiterarbeit.

Entsprechend einer besonders vorteilhaften Ausgestaltung der Erfindung ist die Abspeicherung bereits zu einem Zeitpunkt durchführbar, an welchem das letzte mögliche Positionssignal noch nicht eingetroffen ist.

In weiterer zweckmäßiger Ausgestaltung der erfindungsgemäßen Anordnung ist bei Verwendung von zumindest zwei gegeneinander versetzten Positionssignalen nachträglich, das heißt bei erneutem Anschalten der Auswerteelektronik an die Versorgungsspannung, eine eindeutige Drehrichtungszuordnung durch Nachkorrigieren und Zuordnung des letzten Flankenwechsels einer der Positionsgeber durch die Auswerteelektronik vornehmbar. Der letzte Flankenwechsel von einem der beiden Positionsgeber kann damit immer eindeutig zugeordnet werden.

Gemäß einer besonders vorteilhaften weiteren Ausgestaltung der erfindungsgemäßen Nachlauferfassung berücksichtigt nach erneutem Anschalten der Auswerteelektronik an die Versorgungsspannung dann, wenn die gespeicherten Werte der Positionsgeber gemeinsam einen Zustandswechsel anzeigen, die Auswerteelektronik bei einer Korrektur die vorherige Drehrichtung.

Die erfindungsgemäße Nachlauferfassung findet in besonders vorteilhafterweise Verwendung in Kraftfahrzeugen zum Erfassen der Position beim Stillstand eines Elektromotors, welcher zu Positionierzwecken eingesetzt ist. Dies kann z.B. bei Fensterhebern, Schiebedächern und Sitzen der Fall sein.

In weiterer vorteilhafter Ausgestaltung der Erfindung sind als Positionsgeber zwei um 90° elektrisch versetzte Hallsensoren vorgesehen.

Entsprechend einer besonders zweckmäßigen Ausgestaltung der erfindungsgemäßen Nachlauferfassung enthält die Auswerteelektronik einen Mikrokontroller.

Gemäß einer anderen vorteilhaften Weiterbildung der Erfindung ist als nichtflüchtiger Speicher ein elektronisch programmierbarer Speicher verwendet. Nach einer zweckmäßigen Ausgestaltung ist als elektronisch programmierbarer Speicher ein EEPROM, verwendet, der vorzugsweise Bestandteil des Mikrokontrollers ist.

Die Erfindung ist anhand mehrerer in der Zeichnung dargestellter Ausführungsbeispiele in der nachfolgenden Beschreibung näher erläutert. Es zeigen:
- Fig. 1: schematisch ein Diagramm des Motorsignals und zweier um 90° elektrisch gegeneinander versetzter. Positionssignale eines Stellantriebs, und
- Fig. 2: eine Tabelle mit dem alten Zustand der beiden Inkrementalgeber beim Speichern und dem neuen Zustand der Inkrementalgeber nach erneutem Einschalten der Auswerteelektronik.

### Beschreibung der Ausführungsbeispiele

Gemäß einem Ausführungsbeispiel vorliegender Erfindung wird bei einer Nachlauferfassung von elektrischen Stellmotoren mit inkrementaler Positionserfassung, durch die vorgesehene Auswerteelektronik die Position des Stellmotors beim Abschalten des Motors festgestellt. Dabei läuft der Motor aufgrund der Massenträgheit des Gesamtsystems regelmäßig noch nach, bis es zum endgültigen Stillstand kommt. Dieser Nachlauf wird erfaßt, um die exakte Position des Motors bzw. des von ihm angetriebenen Verstellsystems zu ermitteln. Dazu stellt die Auswerteelektronik die von den Positionsgebern auch und besonders während der Nachlaufphase gelieferten Positionssignale fest. Die festgestellten Zustände der Positionssignale bzw. die Zustände der Positionsgeber werden in einem nichtflüchtigen Speicher abspeichert. Wenn also alle Systemdaten in diesem nichtflüchtigen Speicher abgelegt sind, ist die Voraussetzung dafür gegeben, daß die Auswerteelektronik zeitweise von der Versorgungsspannung abgeschaltet werden kann. Zur Nachlauferfassung ist die Auswerteelektronik mit einem Puffer versehen, damit auch nach dem Abschalten des Motors und der Versorgungsspannung für die Zeit des Nachlaufs die Auswerteelektronik noch in der Lage ist, sowohl die Positionserfassung beim Nachlauf durchzuführen, als auch die vorgesehene Abspeicherung der Daten vorzunehmen.

Damit die Auswerteelektronik zeitweise von der Versorgungsspannung abgeschaltet werden kann, ist sie mit einer Pufferung versehen, die genügend groß ist, um sowohl die Positionserfassung als auch die Abspeicherung der Systemdaten nach Abschaltung des Motors und der Auswerteelektronik von der Versorgungsspannung noch durchführen zu können.

Entsprechend einem besonderen Ausfübrungsbeispiel der Erfindung wird die Abspeicherung bereits zu einem Zeitpunkt durchgeführt, zu welchem das letzte mögliche Positionssignal noch nicht eingetroffen ist. Dadurch kann die Abschaltung der Auswerteelektronik von der Versorgungsspannung bereits zu einem günstigen frühen Zeitpunkt erfolgen und somit erheblich Energie eingespart werden.

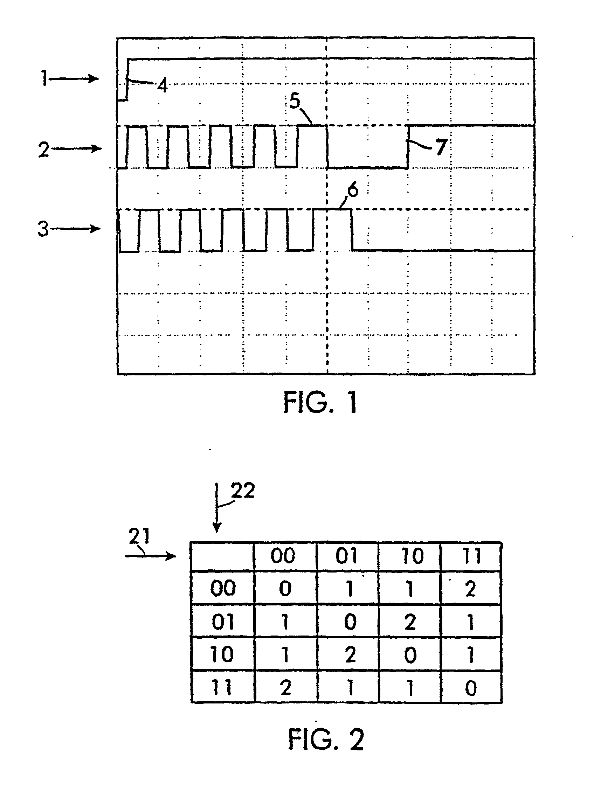

In Fig. 1 ist der beispielhafte Fall dargestellt, daß das in Zeile 1 dargestellte Motorsignal mit Flanke 4 beim Abschalten des nicht näher dargestellten Stellmotors seinen digitalen Zustand ändert. Bei Verwendung von zumindest zwei gegeneinander versetzten Positionssignalen, in Zeile 2 und 3 in Fig. 1 um 90° elektrisch versetzt dargestellt, werden die einzelnen Positionssignale mit zunehmender Zeit immer länger und die Zeiten zwischen den Flankenwechseln nehmen zu. Dies ist besonders deutlich bei den mit 5 und 6 bezeichneten Impulsen ersichtlich. Die Positionssignale können beispielsweise von Hallsensoren geliefert werden.

Um die exakte Position bei Motorstillstand zu erfassen, muß bis zum letzten Flankenwechsel gewartet werden, bevor die Positionsdaten in den nicntflüchtigen Speicher abgespeichert werden können. Entsprechend dem erfindungsgemäßen Ausführungsbeispiel kann diese Zeit verkürzt werden. Dazu werden die Zustände der inkrementalen Positionsgeber ebenfalls im nichtflüchtigen Speicher abgespeichert. Dies hat den Vorteil, daß der letzte Flankenwechsel 7, der nach dem Speichervorgang stattgefunden hat, dann beim nächsten Einschalten des Systems nachkorrigiert werden kann. Damit kann auch die Zeit zur Nachlaufbetrachtung verkürzt werden. Ebenfalls kann dadurch auch die notwendige Pufferkapazität reduziert werden. Somit kann nachträglich, das heißt bei erneutem Anschalten der Auswerteelektronik an die Versorgungsspannung, eine eindeutige Drehrichtungszuordnung durch Nachkorrigieren und Zuordnung des letzten Flankenwechsels einer der Positionsgeber durch die Auswerteelektronik vorgenommen werden.

Durch die Verwendung von zwei um 90° elektrisch versetzten inkrementalen Positionsgebern ist es möglich, eine eindeutige Drehrichtungszuweisung vorzunehmen. Damit kann auch der letzte Flankenwechsel von einem der beiden Positionsgeber eindeutig zugeordnet und nachkorriegiert werden.

In Fig. 2 ist eine matrixartige Tabelle mit dem alten Zustand der beiden Inkrementalgeber beim Speichern und dem neuen Zustand der Inkrementalgeber nach erneutem Einschalten der Auswerteelektronik dargestellt. In der mit 21 bezeichneten ersten Zeile sind mit 00, 01, 10 und 11 die alten Zustände der beiden Inkrementalgeber beim Speichern eingetragen. In der mit 22 bezeichneten linken Spalte ist ein möglicher neuer Zustand der Inkrementalgeber nach erneutem Einschalten des Systems gezeigt. An den Kreuzungspunkten der vier Zeilen und der vier Spalten sind die Werte 0, 1 und 2 eingetragen. Der Wert 0 bedeutet, daß keine Änderung im Zustand neu zu alt eingetreten ist. Der Wert 1 bedeutet, daß ein Korrektur von Position und Drehrichtung eindeutig möglich ist. Der Wert 2 bedeutet, daß eine Korrektur nicht eindeutig möglich ist.

Falls nach erneutem Einschalten des Systems beide Inkrementalgeber einen Zustandswechsel anzeigen, d.h. nach erneutem Anschalten der Auswerteelektronik an die Versorgungsspannung, dann, wenn die gespeicherten Werte der Positionsgeber gemeinsam einen Zustandswechsel anzeigen, berücksichtigt die Auswerteelektronik bei einer Korrektur die vorherige Drehrichtung. Dies ist bei mechanischen Anschlägen nicht immer eindeutig möglich, da z.B. eventuell eine Drehrichtungsumkehr bei der Entspannung eines mechanischen Systems erfolgt. In solchen Fällen kann der Wert 2 zur Überprüfung der Nachlauferfassung benutzt werden und das System gegebenenfalls zurückgesetzt werden. Es lassen sich auch Ungenauigkeiten berücksichtigen, die durch die Hysterese von Hallsensoren entstehen.

In der Auswerteelektronik wird in vorteilhafter Weise ein Mikrokontroller eingesetzt. Als nichtftüchtiger Speicher kann ein elektronisch programmierbarer Speicher verwendet werden, der insbesondere ein EEPROM ist, welcher in besonders zweckmäßiger Weise Bestandteil des Mikrokontrollers sein kann.

Die Erfindung findet bevorzugte Verwendung in Kraftfahrzeugen zum Erfassen der Position beim Stillstand eines Elektromotors, welcher zu Positionierzwecken eingesetzt ist.

Durch die Erfindung wird in vorteilhafter Weise die Zeit zur Nachlaufbetrachtung bzw. Nachlauferfassung eine Motors bei Abschaltung von der Versorgungsspannung verkürzt, die Pufferkapazität kann verringert werden, es lassen sich durch Hystereseeffekte der verwendeten inkrementalen Positionsgeber verursachte Ungenauigkeiten erfassen und es besteht die Möglichkeit, die Nachlauferfassung in gewissen Grenzen zu verifizieren.

## Patentansprüche

1. Nachlauferfassung von elektrischen Stellmotoren mit inkrementaler Positionserfassung, insbesondere bei Verstellmotoren in Kraftfahrzeugen,
mit einer Auswerteelektronik, die Positionssignale (2, 3) von inkrementalen Positionsgebern feststellt,
und die anhand der Positionssignale (2, 3) festgestellte Zustände der inkrementalen Positionsgeber in einem nichtflüchtigen Speicher abspeichert,
**dadurch gekennzeichnet, daß**
- die Auswerteelektronik zeitweise von der Versorgungsspannung abschaltbar ist,
- die Feststellung der exakten Position beim Abschalten des Motors nach erneutem Einschalten der Auswerteelektronik in Abhängigkeit eines Vergleichs der abgespeicherten Zustände der inkrementalen Positionsgeber mit den Zuständen bei erneutem Anschalten erfolgt.

2. Nachlauferfassung nach Anspruch 1, **dadurch gekennzeichnet, daß** die Abspeicherung der festgestellten Zustände der inkrementalen Positionsgeber vor dem Zeitpunkt durchführbar ist, zu welchem das letzte mögliche Positionssignal (7) noch nicht eingetroffen ist.

3. Nachlauferfassung nach Anspruch 1 oder 2, **dadurch gekennzeichnet, daß** der Vergleich zur Festlegung der exakten Position auf der Grundlage einer matrixartigen Tabelle erfolgt, in der festgelegt ist, ob eine Korrektur von Position und Drehrichtung nötig, eindeutig möglich oder nicht eindeutig möglich ist.

4. Nachlauferfassung nach einem der Ansprüche 1 bis 3, **dadurch gekennzeichnet, daß** die Auswerteelektronik mit einer Pufferung versehen ist, die genügend groß ist zur Positionserfassung und Abspeicherung nach Abschaltung der Auswerteelektronik von der Versorgungsspannung.

5. Nachlauferfassung nach Anspruch 3, **dadurch gekennzeichnet, daß** zur Feststellung der exakten Position beim Abschalten des Motors nach erneutem Anschalten der Auswerteelektronik unter Verwendung von zumindest zwei gegeneinander versetzten Positionssignalen (2, 3) eine eindeutige Korrektur von sowohl Drehrichtung als auch Position vornehmbar ist, wenn nur einer der inkrementalen Positionsgeber einen Zustandswechsel anzeigt.

6. Nachlauferfassung nach Anspruch 3, **dadurch gekennzeichnet, daß** zur Feststellung der exakten Position beim Abschalten des Motors nach erneutem Anschalten der Auswerteelektronik unter Verwendung von zumindest zwei gegeneinander versetzten Positionssignalen (2, 3) die Berücksichtigung der vorherigen Drehrichtung erfolgt, wenn zwei der inkrementalen Positionsgeber einen Zustandswechsel anzeigen.

7. Nachlauferfassung nach einem der vorigen Ansprüche, **gekennzeichnet durch** die die Verwendung in Kraftfahrzeugen zum Erfassen der Position beim Stillstand eines Elektromotors, welcher zu Positionierzwecken eingesetzt ist.

8. Nachlauferfassung nach einem der vorigen Ansprüche, **dadurch gekennzeichnet, daß** als Positionsgeber zwei um 90° elektrisch versetzte Hallsensoren vorgesehen sind.

9. Nachlauferfassung nach einem der vorigen Ansprüche, **dadurch gekennzeichnet, daß** die Auswerteelektronik einen Mikrokontroller enthält.

10. Nachlauferfassung nach Anspruch 9, **dadurch gekennzeichnet, daß** als nichtflüchtiger Speicher ein elektronisch programmierbarer Speicher verwendet ist.

11. Nachlauferfassung nach Anspruch 10, **dadurch gekennzeichnet, daß** als elektronisch programmierbarer Speicher ein EEPROM verwendet ist, der vorzugsweise Bestandteil des Mikrokontrollers ist.

## Claims

1. Run-on detection system for electric servomotors with incremental position detection, in particular in the case of servomotors in motor vehicles, having an electronic evaluation system which determines position signals (2, 3) from incremental position transmitters, and uses the position signals (2, 3) to store determined states of the incremental position transmitters in a non-volatile memory, **characterized in that**
- the electronic evaluation system can be disconnected temporarily from the supply voltage, and
- the determination of the exact position upon disconnection of the motor is performed after renewed connection of the electronic evaluation system as a function of a comparison of the stored states of the incremental position transmitters with the states in the event of renewed connection.

2. Run-on detection system according to Claim 1, **characterized in that** the storage of the determined states of the incremental position transmitters can be carried out before the instant at which the last possible position signal (7) has not yet arrived.

3. Run-on detection system according to Claim 1 or 2, **characterized in that** the comparison for determining the exact position is performed on the basis of a matrix-like table in which it is determined whether a correction of position and direction of rotation is necessary, uniquely possible or not uniquely possible.

4. Run-on detection system according to one of Claims 1 to 3, **characterized in that** the electronic evaluation system is provided with a buffer which is sufficiently large for position detection and storage after disconnection of the electronic evaluation system from the supply voltage.

5. Run-on detection system according to Claim 3, **characterized in that** in order to determine the exact position upon disconnection of the motor after renewed connection of the electronic evaluation system by using at least two mutually offset position signals (2, 3) it is possible to undertake a unique correction of both sense of rotation and position if just one of the incremental position transmitters indicates a change of state.

6. Run-on detection system according to Claim 3, **characterized in that** in order to determine the exact position upon disconnection of the motor after renewed connection of the electronic evaluation system by using at least two mutually offset position signals (2, 3) the previous sense of rotation is taken into account if two of the incremental position transmitters indicate a change of state.

7. Run-on detection system according to one of the preceding claims, **characterized by** use in motor vehicles for detecting the position during standstill of an electric motor which is used for positioning purposes.

8. Run-on detection system according to one of the preceding claims, **characterized in that** two Hall sensors offset electrically by 90º are provided as position transmitters.

9. Run-on detection system according to one of the preceding claims, **characterized in that** the electronic evaluation system includes a microcontroller.

10. Run-on detection system according to Claim 9, **characterized in that** an electronically programmable memory is used as non-volatile memory.

11. Run-on detection system according to Claim 10, **characterized in that** an EEPROM which is preferably a component of the microcontroller is used as electronically programmable memory.

## Revendications

1. Détection de la poursuite de mouvement de moteurs de commande électriques à détection incrémentielle de position, notamment pour des moteurs de commande ou d'actionnement de véhicules automobiles, comprenant :
- une électronique d'exploitation qui détecte des signaux de position (2, 3) de capteurs de position incrémentiels, et qui enregistre les états de capteurs incrémentiels de position, constatés à partir des signaux de position (2, 3) dans une mémoire non volatile,
**caractérisée en ce que**
- l'électronique d'exploitation peut être coupée de temps-en-temps de la tension d'alimentation, et
- la constatation de la position exacte lors de la coupure du moteur après un nouveau branchement de l'électronique d'exploitation se fait en fonction d'une comparaison entre les états mis en mémoire du capteur de positon incrémentiel avec les états lors du rebranchement.

2. Détection de poursuite de mouvement selon la revendication 1,
**caractérisée en ce que**
l'enregistrement en mémoire des états constatés des capteurs de position incrémentiels s'effectue avant l'instant auquel le dernier signal de position (7), possible n'est pas encore arrivé.

3. Détection de poursuite de mouvement selon l'une quelconque des revendications 1 ou 2
**caractérisée en ce que**
la comparaison pour déterminer la position exacte se fait en application d'un tableau matriciel qui permet de savoir si une correction de position et de sens de rotation, est nécessaire, possible de manière non équivoque ou possible d'une manière équivoque.

4. Détection de poursuite de mouvement selon l'une quelconque des revendications 1 à 3,
**caractérisée en ce que**
l'électronique d'exploitation comporte un moyen tampon suffisamment grand pour détecter la position et l'enregistrer après la coupure de la tension d'alimentation de l'électronique d'exploitation.

5. Détection de poursuite de mouvement selon la revendication 3,
**caractérisée en ce que**
pour déterminer la position exacte à la coupure du moteur après un rebranchement de l'électronique d'exploitation en utilisant au moins deux signaux de position décalés l'un par rapport à l'autre (2, 3) on effectue une correction non équivoque à la fois du sens de rotation et de la position, si seulement l'un des capteurs de position incrémentiels indique un changement d'état.

6. Détection de poursuite de mouvement selon la revendication 3,
**caractérisée en ce que**
pour déterminer la position exacte à la coupure du moteur après un rebranchement de l'électronique d'exploitation en utilisant au moins deux signaux de position décalés l'un par rapport à l'autre (2, 3), la prise en compte du sens de rotation précédent s'effectue si deux des capteurs incrémentiels de position indiquent un changement d'état.

7. Détection de poursuite de mouvement selon l'une quelconque des revendications précédentes,
**caractérisée par**
son application à des véhicules automobiles pour détecter la position d'un moteur électrique à l'arrêt, utilisé à des fins de positionnement.

8. Détection de poursuite de mouvement selon l'une quelconque des revendications précédentes,
**caractérisée en ce que**
le capteur de position est constitué par deux capteurs Hall décalés électriquement de 90°.

9. Détection de poursuite de mouvement selon l'une quelconque des revendications précédentes,
**caractérisée en ce que**
l'électronique d'exploitation comporte un microcontrôleur.

10. Détection de poursuite de mouvement selon la revendication 9,
**caractérisée en ce que**
la mémoire non volatile est une mémoire programmable électroniquement.

11. Détection de poursuite de mouvement selon la revendication 10,
**caractérisée en ce que**
la mémoire programmable électroniquement est une mémoire EEPROM qui fait de préférence partie du microcontrôleur.
